# EUROPEAN PATENT APPLICATION

(11) **EP 4 446 385 A1**
(43) Date of publication of application: **16.10.2024**
(21) Application number: 22969683.6
(22) Date of filing: 29.12.2022
(51) Int. Cl.: C08L 97/02, C08L 67/02, C08L 67/04, C08J 5/06

(54) **METHODS FOR PREPARING LIGNIN-CONTAINING CELLULOSE NANOFIBRIL AND COMPOSITE MATERIAL REINFORCED WITH SAME**

(71) Applicant: Zhejiang University, Hangzhou, Zhejiang 310058 (CN); INSTITUTE OF ZHEJIANG UNIVERSITY-QUZHOU, Quzhou, Zhejiang 324000 (CN)
(72) Inventor: YANG, Xuan, HANGZHOU, Zhejiang 310058 (CN); WANG, Wenjun, QUZHOU, Zhejiang 324000 (CN); JIN, Kexia, HANGZHOU, Zhejiang 310058 (CN); ZHANG, Da, HANGZHOU, Zhejiang 310058 (CN)
(74) Representative: Bottero, Carlo
(86) International application number: PCT/CN2022/143416
(87) International publication number: WO 2024/138534

(57) **Abstract**

The present invention relates to a method for preparing lignocellulose nanofibril and a lignocellulose nanofibril prepared by the method. The present invention also relates to a method for preparing a lignocellulose nanofibri reinforced composite material, and a lignocellulose nanofibri reinforced composite material prepared by the method.

## Description

### Technical field

The present invention relates to a method for preparing lignocellulose nanofibril and a lignocellulose nanofibril prepared by the method. The present invention also relates to a method for preparing a lignocellulose nanofibril reinforced composite material, and a lignocellulose nanofibril reinforced composite material prepared by the method.

### Background art

Cellulose nanofibril (CNF) is an excellent environmentally friendly nanomaterial due to its high mechanical strength, high aspect ratio, and good biodegradability. However, traditional CNFs are difficult to disperse evenly and easy to aggregate in hydrophobic polymers such as polyester matrices due to their abundant hydrophilic hydroxyl groups on the surface, which increases the processing difficulty and greatly reduces the mechanical properties of the resulting composite materials.

Lignin is the second largest natural polymer after cellulose, with characteristics such as hydrophobicity, antibacterial activity, UV resistance, and high thermal stability.

Lignocellulose nanofibril (LCNF) is a cellulose nanofibril containing lignin, which has the advantages of both CNF and lignin. Its preparation method eliminates the step of lignin removal involved in the preparation of CNF, and therefore eliminates the need for toxic chemical reagents and a large amount of energy consumption. This results in a higher utilization rate of biomass raw materials, which is more in line with the requirements of green and environmental protection in modern society, and has great prospects in industrial promotion and practical applications.

The current methods for preparing LCNF mainly rely on a mechanical dissociation, such as high-pressure homogenization, grinding, microfluidizer homogenization, etc., which is usually combined with ultrasound, acid, alkali, organic solvent, or enzyme pretreatment methods. The common problems in the prior art are that the prepared LCNF has a low lignin content (<10%), uneven size distribution (diameter 5-1000nm), and short length (<650nm); moreover, the pretreatment steps in the preparation method need to be carried out at high temperatures (≥120°C), which leads to high energy consumption and environmental issues.

Spence et al. reported that LCNF with a diameter of <1 µm was prepared using sulfate pulp containing 2.4% lignin as raw materials by beating pretreatment, and fibrillation process 20 times with a microfluidizer-type homogenizer, resulting in a high energy consumption (A comparative study of energy consumption and physical properties of nanofibrillated cells produced by different processing methods, Cellulose, 2011, Issue 18, pp. 1097-1111). Nair et al. reported that LCNF with a lignin content of 5.2% and a diameter of approximately 50nm was prepared using pine bark as raw material by NaOH and NaClO pretreatment, grinding 15 times with a grinder (Effect of high residual lignin on the thermal stability of nanofibers and its enhanced mechanical performance in aqueous environments, Cellulose, 2015, Issue 22, pp. 3137-3150,). However, when the lignin content increased to 21.3%, its diameter reached 100 nm. Herrera et al. reported that LCNF with high lignin content (23%) was prepared using chemical mechanical pulp as raw material with a 2,2,6,6-tetramethylpiperidinyloxy (TEMPO) mediated oxidation pretreatment using NaBr and NaClO, followed by homogenization with a high pressure homogenizer (Preparation and evaluation of high lignin content nanofibers from eucalyptus pulps, Cellulose, 2018, Issue 25, pp. 3121-3133,). However, the resulting LCNF was uneven in size and contained a large number of micron sized particles, and TEMPO was a non-green chemical. Rojo et al. reported that LCNF with a lignin content of 1.7-11.5% and a diameter of 20-44nm was prepared using Picea abies fibers as raw material by pretreatment with SO₂ at 135-155°C and 6 times of fibrillation process using microfluidizer-type homogenizer (Comprehensive elucidation of the effect of residual light on the physical, barrier, mechanical and surface properties of nanocellulose films, Green Chem., 2015, issue 17, pp 1853-1866); although the preparation of LCNF by SO₂ steam pretreatment reduced energy consumption and diameter, the pretreatment process was high in cost, and SO₂ caused environmental pollution. Liu et al. reported that LCNF with a diameter of 20-100 nm was prepared using bamboo as raw material by pretreatment with glycerol at 120°C for 2 hours, followed by screw extrusion, grinding and dissociation (A novel method to prepare lignocellulose nanofibers directly from bamboo chips, Cellulose, 2018, Issue 25, pp.7043-7051). However, the resulting LCNF was uneven in size distribution, poor in solution stability, and easy to aggregate. J.Y Zhu, reported that LCNF with a lignin content of 7-16% and a diameter of 15-51 nm was prepared by pretreatment with organic acid (p-toluenesulfonic acid), and 4-13 times of fibrillation using homogenizer (Producing wood based nanomaterials by rapid segmentation of wood at 80 ° C using a recyclable acid substrate, Green Chem, In 2017, issue 19, pp 3370-3379). However, the resulting LCNF was uneven in size, and the pretreatment temperature was up to 165°C. This high temperature resulted in lignin condensation and cellulose degradation, thereby reducing the utilization rate of raw materials.

Accordingly, the problems in the preparation methods of LCNF in the prior art can be summarized as follows: (1) most of them are based on unbleached pulp fibers, and the yield calculated from real raw materials is less than 50%; (2) the pretreatment process is not environmentally friendly enough, and it also requires high energy consumption throughout the entire preparation process; and (3) LCNF with high lignin content (>15%), high aspect ratio (diameter<20nm and length>1000nm), and long-term solution stability (high surface charge) cannot be obtained at the same time.

In summary, there are still serious challenges in the preparation of LCNF with high lignin content, uniform size, and high mechanical properties under mild conditions, environmental friendliness, and low energy consumption in the prior art.

In addition, in the process of preparation of reinforced composite materials using LCNF as a filler, in order to mix LCNF and polymer matrix thoroughly, it is generally necessary to either use a special solvent system, or a complex mechanical blending process. For example, Wang et al. reported that DMAc was used as a good solvent to mix LCNF and PLA ("Thermal, Mechanical, and Degradation Properties of Nanocomposites Preparing Using Lignin Cellulose Nanofibers and Poly (Lactic Acid)," BioRes, 2014, Issue 9, pp. 3211-3224). Herzele et al. reported that it is necessary to do a solution exchange of LCNF dispersion into acetone and toluene to achieve the dispersion of LCNF in the polycaprolactone matrix ("Reinforcement of polycaprolactone with nanofibrillated lignocellulose", Industrial Crops and Products, 2016, Vol. 93, pp. 302-308). Cindradewi et al. reported that NMP was used as a good solvent for blending LCNF and polybutylene succinate (PBS) ("Preparation and Characterization of Polybutylene Succinate Reinforced with Pure Cellulose Nanofiber and Lignocellulose Nanofiber Using Two Step Process ", Polymers, 2021, Issue 13, p. 3945). If this type of highly toxic organic solvent is not used, complex mechanical blending methods need to be used. For example, Ono et al. reported that good premixing of LCNF and PP granular material can only be achieved using high-energy grinders and internal mixers successively ("Flame retardance converted lignocellulose nanofibers (LCNFs) by the Mannic reaction with (amino-1,3,5-triazinyl) photosphoramidates and their properties," RSC Adv., 2022, Issue 12, p. 3300).

In summary, the problem with the methods of preparing LCNF reinforced composite materials in the prior art is that it is not possible to directly prepare LCNF reinforced composite materials. Instead, as mentioned above, LCNF needs to be prepared first, followed by solvent exchange or complex mechanical blending processes to achieve premixing with the polymer matrix, and subsequent processing. Therefore, the process is complex and the dispersion of LCNF in the polymer matrix is common.

Therefore, there is a need to develop a method for preparing LCNF and a method for preparing LCNF reinforced composite materials, which overcome the aforementioned defects.

### Brief description of the drawings

Fig. 1 is a TEM photo of LCNF prepared in Example 1-1.
Fig. 2 is a TEM photo of LCNF prepared in Example 1-2.
Fig. 3 is a TEM photo of LCNF prepared in Example 1-4.
Fig. 4 is a TEM photo of LCNF prepared in Example 1-5.
Fig. 5 is a TEM photo of LCNF prepared in Example 1-6.
Fig. 6 is a TEM photo of LCNF prepared in Example 1-7.
Fig. 7 is a TEM photo of LCNF prepared in Example 1-8.
Fig. 8 is a TEM photo of LCNF prepared in Comparative Example 1-1.
Fig. 9 is a TEM photo of LCNF prepared in Comparative Example 1-2.
Fig. 10 is an SEM photo of the cross-section of LCNF reinforced PBAT composite film prepared in Example 2-2.
Fig. 11 is an SEM photo of the cross-section of LCNF reinforced PBAT composite film prepared in Comparative Example 2-1.
Fig. 12 is an SEM photo of the cross-section of a pure PBAT film without LCNF filler prepared in Comparative Example 2-7.

### Content of the invention

The object of the present invention is to provide a method for preparing lignocellulose nanofibril under mild, environmentally friendly, and low energy consumption conditions to solve the problems in the prior art. The method uses a binary anhydride as a pretreatment reagent, and subjecting different types of biomass raw materials to undergo an esterification reaction at a lower temperature (≤120°C), thereby grafting a large number of carboxyl groups onto the surface of fibers and increasing the repulsion force between fibers in aqueous solution, Therefore, lignocellulose nanofibril with improved performances can be prepared under mild, environmentally friendly, and low energy consumption conditions.

At one aspect, the present invention provides a method for preparing lignocellulose nanofibril, comprising:
(1) dispersing a biomass raw material in a binary anhydride and about 0-5% water, performing an esterification pretreatment reaction at a temperature below 120°C to obtain a pretreatment reaction product, and washing the pretreatment reaction product until neutral to obtain a neutral pretreatment reaction product; and
(2) dispersing the neutral pretreatment reaction product in a medium and performing a dissociation treatment in nanofibrillation equipment to obtain a dispersion of lignocellulose nanofibril.

In the esterification pretreatment reaction of step (1) above, the temperature used is crucial and needs to be controlled below 120°C, preferably about 20-120°C, more preferably about 60-110°C, and most preferably about 80-100°C; The pressure conditions used are usually about 1-10 bar, preferably about 1-3 bar; the pretreatment time is usually about 0.5-24 hours, preferably about 1-5 hours.

The biomass raw material is known in the art, generally including but not limited to wood (e.g. coniferous wood, broad-leaved wood), Gramineous plants, crop straws, fruit shells, pine cones, plant residues (e.g. sugarcane bagasse, coffee bean residue), etc. The preferred biomass raw materials used in the method of the present invention include, for example, pine, cypress, fir, eucalyptus, poplar, birch, bamboo, rice straw, corn straw, wheat straw, sorghum straw, reed, peanut shell, rice husk, pine cones, sugarcane bagasse, coffee bean residue, etc. In the present invention, one biomass raw material or a mixture of two or more biomass raw materials can be used.

The binary anhydride is the one commonly used in the art, including, for example, malonic anhydride, cis-butenedioic anhydride (maleic anhydride), dimethyl maleic anhydride, fumaric anhydride, succinic anhydride, methyl succinic anhydride, 2-hydroxy succinic anhydride, 2-propenyl succinic anhydride, S-acetylmercapto succinic anhydride, cis-3-carboxylpentenedicarboxylic anhydride, trans-1,2-cyclohexanedicarboxylic anhydride, glutaric anhydride, adipic anhydride, cis-4-cyclohexene-1,2-dicarboxylic anhydride, cyclohexane 1,2-dicarboxylic anhydride, heptanedioic anhydride, octanedioic anhydride, azelaic anhydride, dodecyl succinic anhydride, dodecenyl succinic anhydride, phthalic anhydride, 4-chloro phthalic anhydride, tetrachloro phthalic anhydride, 3-fluoro phthalic anhydride, 3,6-difluoro phthalic anhydride, tetrafluoro phthalic anhydride, tetrahydro phthalic anhydride, methyl tetrahydro phthalic anhydride, citric anhydride, etc. In the method of the invention, the preferred binary anhydride is selected from the group consisting of maleic anhydride, succinic anhydride, glutaric anhydride and phthalic anhydride. In the present invention, one binary anhydride or a mixture of multiple binary anhydrides can be used.

The ratio (by weight) of the biomass raw material to the binary anhydride is usually about 5:1 to 1:100, preferably about 1:1 to 1:50, and more preferably about 1:4 to 1:20.

In the esterification pretreatment reaction of step (1) above, in addition to the binary anhydride, about 0-5% water can be added, preferably about 0-2% water, based on the total weight of the biomass raw material, binary anhydride, and water. In the method of the present invention, preferably, no water is present in the esterification pretreatment reaction, i.e., the esterification pretreatment reaction is carried out in an anhydrous system. Among them, the water includes water contained in the raw material and additional water added, so the water content refers to the total amount of water contained in the raw material and additional water added. Therefore, in the absence of water in the esterification pretreatment reaction, all raw materials are dry and do not contain water.

The washing step is known in the art and can be carried out using water or an alkali solution, wherein the alkali solution is an aqueous solution of a known alkali in the art, which is used to wash off residual anhydride and reaction byproducts in the pretreatment reaction product to obtain a neutral pretreatment reaction product. The alkali includes, for example, sodium hydroxide, potassium hydroxide, sodium carbonate, potassium carbonate, sodium bicarbonate, potassium bicarbonate, sodium bisulfate, potassium bisulfate, sodium monohydrogen phosphate, and potassium monohydrogen phosphate. The concentration of the alkali solution is usually about 0.1-40%.

In the dissociation step of (2) above, the medium includes water or an aqueous solution of a polymer, preferably water. The polymer is those commonly used to dissociate biomass raw materials, including, for example, polyvinyl alcohol, polyethyleneglycol, starch, starch derivatives such as carboxymethyl starch and starch acetate, chitosan, chitin, hydroxymethyl cellulose, carboxymethyl cellulose, polyacrylamide (PAM), hydrolyzed polyacrylamide (HPAM), pyrrolidone (PVP), etc. The polymer is preferably polyvinyl alcohol, starch, starch derivatives, chitosan, chitin and carboxymethyl cellulose. The concentration of the polymer in its aqueous solution is usually about 0.01-60%.

The relative amount of the neutral pretreatment reaction product and the medium can vary over a wide range, typically with a weight ratio of about 0.01:100-10:100, preferably about 0.05:100-10:10.

Further, the method of the present invention includes an optional step (3): further drying the lignocellulose nanofibril dispersion obtained in step (2) to remove the medium therein and obtain a powder of lignocellulose nanofibril. In this case, the medium is usually water or starch and its derivatives. The powder of the lignocellulose nanofibril can be easily re-dispersed into the medium to form a stable dispersion.

The nanofibrillation equipment is known in the art, including, for example, ultrasonic instrument, high-pressure homogenizer, ball mill, discgrinder, microfluidizer-type homogenizer, mixer, ice breaker, etc. The conditions for dissociation using nanofibrillation equipment are also known in the art, for example, the temperature is usually room temperature; where a mixer or ice breaker is used, the stirring speed is usually about 5000-40000rpm; where a high-pressure homogenizer is used, the piston spacing is usually about 50-500 µm, and the pressure is usually about 10-500 MPa; where an ultrasound instrument is used, its power is usually about 500-2000 W; where a microfluidizer-type homogenizer is used, the pipe diameter is usually about 50-500 µm, and the pressure is usually about 10-800 MPa.

The dispersion or powder of lignocellulose nanofibril obtained by the method of the present invention exhibits one or more improved properties and excellent comprehensive performance balance, including high lignin content (which means higher hydrophobicity and yield), high surface charge (which means better long-term stability and better dissociation performance of the solution), high thermal decomposition temperature (which means a higher processing temperature window and better thermal stability of the end product when mixed with a polymer matrix to prepare composite materials), longer length, and finer diameter (thus a higher aspect ratio, which means that the formed network cross-linked structure has a lower percolation threshold, thereby achieving higher mechanical properties). Typically, the resulting dispersion or powder of lignocellulose nanofibril has a lignin content of about 10-40%, preferably about 15-40%, and more preferably about 15-25%, a surface charge of about 300-3000 µmol/g, preferably about 600-2000 µmol/g, a thermal decomposition temperature of about above 200°C, preferably about above 240°C, a length of about 500-5000nm, preferably about 1000-5000nm, a diameter of about 3-20nm, preferably about 3-1 0nm, and a aspect ratio of about 50-1000, preferably about 100-1000.

Therefore, at another aspect, the present invention relates to a dispersion or powder of lignocellulose nanofibril, characterized by one or more improved properties: a lignin content of about 10-40%, preferably about 15-40%, and more preferably about 15-25%, a surface charge of about 300-3000 µmol/g, preferably about 600-2000 µmol/g, a thermal decomposition temperature of about above 200°C, preferably about above 240°C, a length of about 500-5000nm, preferably about 1000-5000nm, a diameter of about 3-20nm, preferably about 3-10nm, and an aspect ratio of about 50-1000, preferably about 100-1000.

The dispersion of lignocellulose nanofibril with the above improved properties can be used in the common applications of lignocellulose nanofibril, especially in the preparation of thin films, papermaking wet additives, gel raw materials, coatings, etc.

The powder of lignocellulose nanofibril with the above improved properties can be used as a filler in polymer composite materials to improve the properties of the composite materials, including mechanical properties, UV resistance, barrier properties, and degradation properties.

At another aspect, the present invention provides a method for preparing a lignocellulose nanofibril reinforced composite material, comprising:
(1) dispersing a biomass raw material in a binary anhydride and about 0-5% water, performing an esterification pretreatment reaction at a temperature below 120°C to obtain a pretreatment reaction product, and washing the pretreatment reaction product until neutral to obtain a neutral pretreatment reaction product; and
(2) drying the neutral pretreatment reaction product and mixing with a polymer matrix to obtain a lignocellulose nanofibril reinforced composite material.

The esterification pretreatment reaction in step (1) above is the same as step (1) in the method for preparing lignocellulose nanofibril mentioned above.

The drying of step (2) above is carried out using conventional drying processes, including, for example, freeze-drying, atmospheric pressure drying, evaporation drying, and spray drying. Those skilled in the art may know that different drying methods result in different drying conditions. Usually, in freeze-drying, the temperature is usually about -30°C to 60°C, and the time is usually about 12-48 hours; In evaporation drying, the temperature is usually about 60-100°C and the time is usually about 1-5 hours.

The polymer matrix is known in the art. Suitable examples in the method of the present invention include, for example, polyethyleneglycol (PEG), polyvinyl alcohol (PVA), polylactic acid (PLA), polybutylene adipate terephthalate (PBAT), polybutylene succinate (PBS), polybutylene succinate adipate (PBSA), poly(ε-caprolactone), polypropylene carbonate) (PPC), polyglycolic acid(PGA), poly (butylene succinate-co-terephthalate) (PBST), poly (butylene succinate-co-terephthalate) (PEST), poly(ethylene succinate)(PES), polyurethane (PU), polyamide (PA), polycarbonate (PC), polyoxymethylene (POM), polyethylene terephthalate (PET), polybutylene terephthalate (PBT), polypropylene terephthalate (PTT), polyethylene naphthalate (PEN), polydiallyl terephthalate (PDAP), poly(p-hydroxybenzoate) (PHB), and polyacrylonitrile (PAN). Preferred polymer matrix includes polybutylene succinate adipate, polylactic acid, and polyurethane. In the method of the present invention, a mixture of one or more polymer matrix can be used.

The dried pretreatment reaction product is typically present in the polymer matrix in an amount of about 0.05-20%, preferably about 0.05-5%, based on the total weight of the dried pretreatment reaction product and the polymer matrix.

The mixing can be carried out using an equipment known in the art, such as high-speed mixer, screw extruder, and internal mixer. The mixing process conditions are also conventional, usually carried out at a temperature of about 40-250°C and normal pressure for about 1-30 minutes.

The method for preparing a lignocellulose nanofibril reinforced composite material according to the present invention has advantages of: LCNF reinforced composite materials can be directly prepared (i.e., the biomass raw materials that have been subjected to esterification pretreatment are in situ dissociated into LCNF during mixing with the polymer matrix), without the need for complex processes such as preparing LCNF first and then mixing with the polymer matrix through complex steps, which obviously simplifies the process, reduces energy consumption and improves the dispersibility of LCNF in the polymer matrix, and thereby preparing composite materials with improved properties, including higher mechanical properties (such as modulus, strength, and toughness), higher UV resistance, higher barrier properties (water andgas resistance), and better or controllable degradation performance.

Therefore, at another aspect, the present invention further relates to a lignocellulose nanofibril reinforced composite material, characterized by one or more improved properties: higher mechanical properties (such as modulus, strength, and toughness), higher UV resistance, higher barrier properties (water and gas resistance), and better or controllable degradation performance.

The lignocellulose nanofibril reinforced composite material can be used in commonly used applications of conventional lignocellulose nanofibril reinforced composite material, especially in applications of plastic films, plastic bags, packaging thin films, plastic wrap, straws, plastic containers, etc.

### Examples

In order to make the object, technical solution, and advantages of the present invention clear and unambiguous, the invention will be further described in detail with reference to examples. It shall be understood that the specific examples described here are only intended to explain the present invention and are not intended to limit it.

Unless otherwise specified, the raw materials and equipments used in the examples are commercially available conventional products. Unless otherwise specified, the temperature and pressure conditions used refer to normal temperature and atmospheric pressure.

### Example 1-1: Preparation of lignocellulose nanofibril (LCNF) and a thin film thereof

5g of dried bamboo powder was added to 25g of maleic anhydride, and performed an esterification pretreatment reaction at 95°C and 1bar for 3h; subsequently, to the reaction system was added a large amount of deionized water to terminate the reaction, and the pretreatment reaction product was washed with a small amount of sodium hydroxide until neutral; followed by mechanical dissociation in water with a high-speed mixer at 8000rpm for 5 minutes to obtain a dispersion of LCNF.

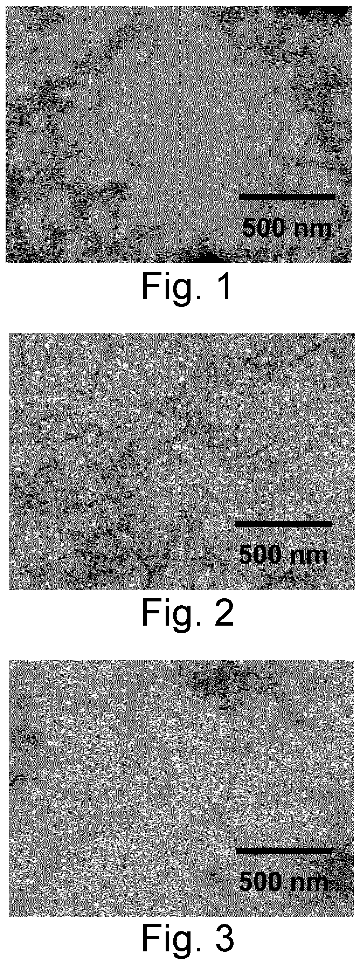

The morphology of LCNF dyed with phosphotungstic acid was observed under transmission electron microscopy (TEM), see Fig. 1.

The dispersion of LCNF was diluted with water to a concentration of 0.05%, suction filtered to form a thin film, and the thin film was dried by hot pressing at 90°Cfor 15 minutes to obtain LCNF thin film with a dry film thickness of 30 µm.

### Example 1-2: Preparation of LCNF and a thin film thereof

The preparation was as described in Example1-1, except that additional water was added in the esterification pretreatment reaction, that is, 5g of dried bamboo powder was added to the mixture of 25g of maleic anhydride and 0.5g of water.

The morphology of LCNF dyed with phosphotungstic acid was observed under transmission electron microscopy, see Fig. 2.

### Examples 1-3: Preparation of LCNF

5g of dried bamboo powder was added to a mixture of 25g of maleic anhydride and 0.5g of water, and performed an esterification pretreatment reaction at 95°C and 1 bar for 3 hours; subsequently, to the reaction system was added a large amount of deionized water to terminate the reaction, and the pretreatment reaction product was washed with a small amount of sodium hydroxide until neutral; followed by mechanical dissociation in a 50% polyvinyl alcohol aqueous solution with a high-speed mixer at 8000rpm for 5 minutes to obtain a dispersion of LCNF.

### Examples 1-4: Preparation of LCNF

5g of dried bamboo powder was added to a mixture of 30g of maleic anhydride and 0.5g of water, and performed an esterification pretreatment reaction at 95°C and 1 bar for 3 hours; subsequently, to the reaction system was added a large amount of deionized water to terminate the reaction, and the pretreatment reaction product was washed with a small amount of potassium hydroxide aqueous solution until neutral; followed by mechanical dissociation in water with a high-speed mixer at 8000rpm for 5 minutes to obtain a dispersion of LCNF.

The morphology of LCNF dyed with phosphotungstic acid was observed under transmission electron microscopy, see Fig. 3.

### Examples 1-5: Preparation of LCNF

5g of dried pine wood powder was added to 50g succinic anhydride, and performed an esterification pretreatment reaction at 110°Cand 2 bar for 2 hours; subsequently, to the reaction system was added a large amount of deionized water to terminate the reaction, and the pretreatment reaction product was washed with a small amount of sodium hydroxide aqueous solution until neutral; followed by mechanical dissociation in water with a high-speed mixer at 8000rpm for 5 minutes to obtain a dispersion of LCNF.

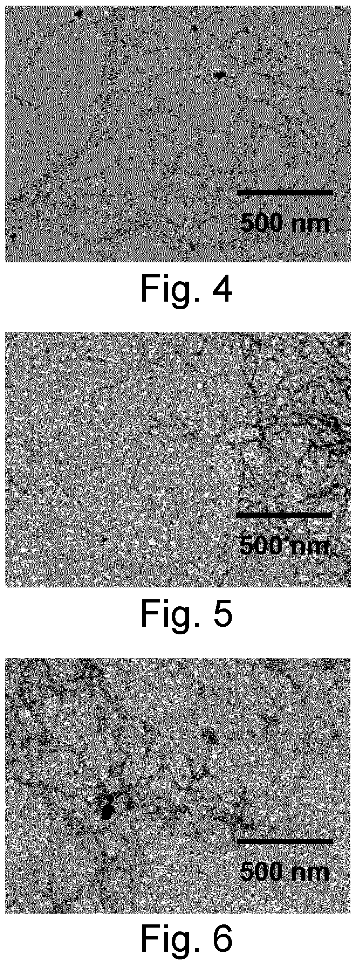

The morphology of LCNF dyed with phosphotungstic acid was observed under transmission electron microscopy, see Fig. 4.

### Examples 1-6: Preparation of LCNF

The preparation was as described in Example 1-5, except that additional water was added in the esterification pretreatment reaction, that is, 5g of dried pine wood powder was added to a mixture of 50g of succinic anhydride and 0.5g of water.

The morphology of LCNF dyed with phosphotungstic acid was observed under transmission electron microscopy, see Fig. 5.

### Examples 1-7: Preparation of LCNF

5g of dried corn straw powder was added to 75g dodecyl succinic anhydride, and performed an esterification pretreatment reaction at 80°C and 5 bar for 5 hours; subsequently, to the reaction system was added a large amount of deionized water to terminate the reaction, and the pretreatment reaction product was washed with a large amount of water until neutral; followed by mechanical dissociation twice in water for 5 minutes each time with a high-pressure homogenizer with a piston spacing of 200-500 µm to obtain a dispersion of LCNF.

The morphology of LCNF dyed with phosphotungstic acid was observed under Transmission electron microscopy, see Fig. 6.

### Examples 1-8: Preparation of LCNF

5g of dried bamboo powder was added to 100g of tetrahydrophthalic anhydride, and added 1g of water, and performed esterification pretreatment reaction at 110°C and 2 bar for 3 hours; subsequently, to the reaction system was added a large amount of deionized water to terminate the reaction, and the pretreatment reaction product was washed with a small amount of potassium hydroxide aqueous solution until neutral; followed by mechanical dissociation in water with a high-pressure mixer at 8000rpm for 5 minutes to obtain a dispersion of LCNF.

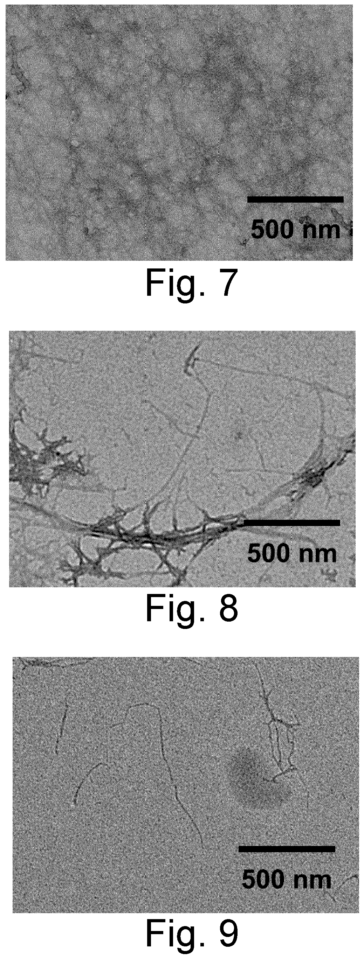

The morphology of LCNF dyed with phosphotungstic acid was observed under Transmission electron microscopy, see Fig. 7.

### Examples 1-9: Preparation of LCNF powder

The dispersion of LCNF obtained in Examples 1-2 was vacuum dried by freeze-drying process at a temperature of -40°C for 24 hours to obtain LCNF powder.

Comparative example 1-1: Preparation of LCNF and a thin film thereof The preparation was as described in Example 1-1, except that the temperature in the esterification pretreatment reaction was 130°C

The morphology of LCNF dyed with phosphotungstic acid was observed under transmission electron microscopy, see Fig. 8.

### Comparative example 1-2: Preparation of LCNF and a thin film thereof

The preparation was as described in Example 1-2, except that additional water was added in the esterification pretreatment reaction, that is, 5g of dried bamboo powder was added to a mixture of 25g of maleic anhydride and 2.0g of water.

The morphology of LCNF dyed with phosphotungstic acid was observed under transmission electron microscopy, see Fig. 9.

### Examples 1-10: Testing of the performances of LCNF

In this example, the lignin content, surface charge, and morphology characteristics of the LCNF dispersion prepared in Examples 1-1 to 1-8 and Comparative examples 1-1 to 1-2 were tested, respectively.

The testing method was as follows.

Determination of lignin content: lignin content was tested according to the Chinese agricultural biomass raw material cellulose, hemicellulose, lignin determination standard (NY/T 3494-2019).

Determination of surface charge: potentiometric titration. Specifically, ion exchange resin was used for full exchange to make all carboxyl groups on the surface of nanocellulose exist in a form of -COOH, then the LCNF dispersion with a known concentration was titrated with 0.1mol/L NaOH standard solution, the change of conductivity in the titration process was continuously determined using a conductivity meter, and the end point of titration was determined according to abrupt change of slope.

Thermal decomposition temperature (Tₒₙₛₑₜ): Tₒₙₛₑₜ was tested under nitrogen atmosphere with a thermogravimetric analyzer (TG).

Morphological characteristics: the diameter and length of LCNF were measured by transmission electron microscope (TEM) or atomic force microscopy (AFM).

The test results were shown in Table 1 below.

**Table 1**

| Sample | lignin content(%) | surface charge(%) | Diameter (nm) | length (µm) | Tₒₙₛₑₜ (°C) |
|---|---|---|---|---|---|
| Example 1-1 | 25 | 1200 | 15.0±3 | >2.5 | 285 |
| Example 1-2 | 21 | 2350 | 3.0±0.6 | >2.5 | 284 |
| Example 1-3 | 21 | 2300 | 3.0±0.5 | >2.5 | 284 |
| Example 1-4 | 13 | 2450 | 2.5±0.5 | >2.5 | 280 |
| Example 1-5 | 18 | 2230 | 8.2±1.0 | >1 | 283 |
| Example 1-6 | 16 | 2350 | 3.5±1.0 | >1 | 282 |
| Example 1-7 | 20 | 1900 | 8.0±0.5 | >1.5 | 285 |
| Example 1-8 | 20 | 900 | 4.8±0.9 | >1 | 286 |
| Comparative example 1-1 | 23 | 650 | 80±15 | >1 | 287 |
| Comparative example 1-2 | 7 | 1500 | 2.5±0.5 | 0.3 | 275 |

The above results showed that:
--According to the method of the present invention, LCNF with high lignin content, high charge, long length, small diameter, and thermal decomposition temperature of ≥270°C can be prepared using wood, bamboo, and crop straw, which broadened the scope of biomass raw materials that can be effectively utilized;
--Addition of a small amount of water can promote the hydrolysis of binary anhydride, increase the charge of LCNF and reduce the diameter of LCNF;
-- Pretreatment temperature of 30-120°C can lead to LCNF with significantly improved diameter, length, and lignin content, the improved performances were very important for LCNF as a filler; a temperature greater than 120°C increase the diameter, which may be due to high-temperature conditions causing lignin to be removed, condensed, and agglomerated on the surface of cellulose, thereby hindering the depolymerization of fibers.

### Examples 1-11: Test of the properties of LCNF thin films

In this example, the mechanical properties of LCNF thin films prepared in Examples 1-1 and 1-2 and Comparative Examples 1-1 and 1-2 were tested, respectively.

The mechanical properties of the thin films were tested using 3345 Tensile testing machine (Instron, USA) according to GBIT 1040.3-2006. The actual thickness of the test specimens was measured using CT-100 thickness gauge, at least 7 specimens were prepared for each group, and the average value was taken. The tensile rate for the test was 2.5 mm/min.

The test results were shown in Table 2 below.

**Table 2**

| Samples | tensile strength (MPa) | elongation at break (%) | Young's modulus (GPa) |
|---|---|---|---|
| Example 1-1 | 210±10 | 5.0±0.2 | 11.9±0.8 |
| Example 1-2 | 270±10 | 4.5±0.2 | 12.9±0.5 |
| Comparative example 1-1 | 141±9 | 3.6±0.2 | 8.7±0.3 |
| Comparative example 1-2 | 171±10 | 1.6±0.2 | 11.7±0.5 |

The above results showed that, the mechanical properties of the LCNF thin film prepared in Examples 1-1 and 1-2 of the present invention were significantly better than those in Comparative examples 1-1 and 1-2, this was because the LCNF prepared in the present invention had a smaller and more uniform diameter as well as a longer length, resulting in a more compact thin film structure. Especially, since LCNF in Comparative example 1-1 was large and uneven in diameter, the mechanical properties of the thin film were the worst; although the LCNF in Comparative examples 1-2 was similar in diameter to Examples 1-2, the LCNF network structure inside the thin film was poor due to its short length, resulting in poor mechanical properties.

### Example 2-1: Preparation of thin film of LCNF reinforced PBAT composite material

5g of dried bamboo powder was added to 25g of maleic anhydride, and performed esterification pretreatment reaction at 95°C and 1bar for 3 hours; subsequently, to the reaction system was added a large amount of deionized water to terminate the reaction, and the pretreatment reaction product was washed with a small amount of sodium hydroxide aqueous solution until neutral, then vacuum dried with a freeze-drying machine at -40°Cfor 24 hours; and 1wt% of the dried product was added to PBAT, mixed well and extruded using a twin-screw extruder at 150°C and 100 rpm to obtain LCNF reinforced PBAT composite material.

The resulting composite material was dissolved in chloroform (with a solid-liquid ratio of the composite material to chloroform of 1:10), and cast into a thin film, and then the solvent was evaporated to obtain a thin film of the composite material with a dry film thickness of 30 µm.

### Example 2-2: Preparation of thin film of LCNF reinforced PBAT composite material

The preparation was as described in Example 2-1, except that additional water was added in the esterification pretreatment reaction, that is, 5g of dried bamboo powder was added to a mixture of 25g of maleic anhydride and 0.5g of water.

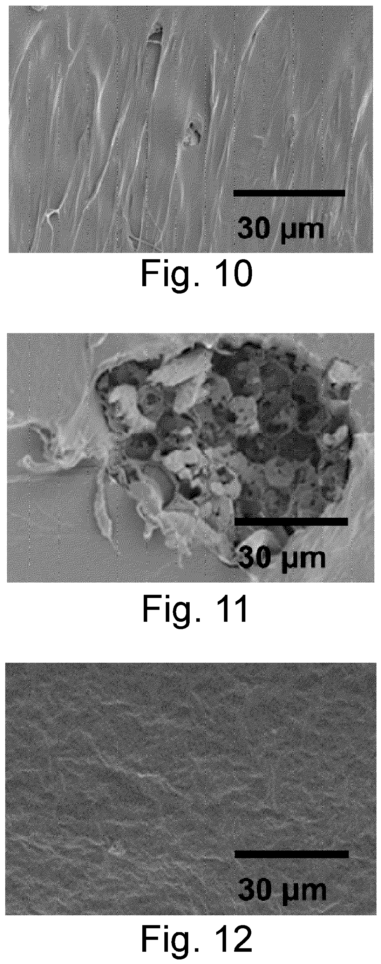

The cross-section of the prepared thin film of the composite was observed by scanning electron microscope (SEM), see Fig. 10.

Example 2-3: Preparation of thin film of LCNF reinforced PBAT composite material

5g of dried corn straw was added to 75g of dodecyl succinic anhydride, and performed esterification pretreatment reaction at 80°C and 5 bar for 5 hours; subsequently, to the reaction system was added a large amount of deionized water to terminate the reaction, and the pretreatment reaction product was washed with a large amount of water until neutral, and then vacuum dried with a freeze-drying machine at -40°C for 24 hours; and 1 wt% of the dried product was added to PBAT, mixed well and extruded using a twin-screw extruder at 150°Cand 100 rpm to obtain LCNF reinforced PBAT composite material.

The resulting composite material was dissolved in chloroform (with a solid-liquid ratio of the composite material to chloroform of 1:10), and cast into a thin film, and then the solvent was evaporated to obtain a thin film of the composite material with a dry film thickness of 30 µm.

### Example 2-4: Preparation of thin film of LCNF reinforced PBAT composite material

5g of dried pine wood powder was added to a mixture of 50g of succinic anhydride and 0.5g of water, and performed esterification pretreatment reaction at 110°C and 2 bar for 2 hours; subsequently, to the reaction system was added a large amount of deionized water to terminate the reaction, and the pretreatment reaction product was washed with a small amount of sodium hydroxide until neutral, and then vacuum dried with a freeze-drying machine at -40°Cfor 24 hours; and 1 wt% of the dried product was added to PBAT, mixed well and extruded using a twin-screw extruder at 150°C and 100 rpm to obtain LCNF reinforced PBAT composite material.

The resulting composite material was dissolved in chloroform (with a solid-liquid ratio of the composite material to chloroform of 1:10), and cast into a thin film, and then the solvent was evaporated to obtain a thin film of the composite material with a dry film thickness of 30 µm.

### Example 2-5: Preparation of thin film of LCNF reinforced PBAT composite material

5g of dried bamboo powder was added to a mixture of 30g of maleic anhydride and 0.5g of water, and performed esterification pretreatment reaction at 95°C and 1 bar for 4 hours; subsequently, to the reaction system was added a large amount of deionized water to terminate the reaction, and the pretreatment reaction product was washed with a small amount of potassium hydroxide until neutral, and then vacuum dried with a freeze-drying machine at -40°C for 24 hours; and 1 wt% of the dried product was added to PBAT, mixed well and extruded using a twin-screw extruder at 150°C and 100 rpm to obtain LCNF reinforced PBAT composite material.

The resulting composite material was dissolved in chloroform (with a solid-liquid ratio of the composite material to chloroform of 1:10), and cast into a thin film, and then the solvent was evaporated to obtain a thin film of the composite material with a dry film thickness of 30 µm.

### Example 2-6: Preparation of thin film of LCNF and polylactic acid composite material

The preparation was as described in Example 2-1, except that PBAT was replaced by polylactic acid.

### Example 2-7: Preparation of thin film of LCNF and polyurethane composite material

The preparation was as described in Example 2-1, except that PBAT was replaced by polyurethane.

### Comparative example 2-1: Preparation of thin film of LCNF reinforced PBAT composite material

The preparation was as described in Example 2-1, except that the temperature used in the esterification pretreatment reaction was 130°C.

The cross-section of the prepared thin film of the composite material was observed using SEM, as shown in Figure 11.

### Comparative example 2-2: Preparation of thin film of LCNF reinforced PBAT composite material

The preparation was as described in Example 2-1, except that additional water was added in the esterification pretreatment reaction, that is, 5g of dried bamboo powder was added to a mixture of 25g of maleic anhydride and 2.0g of water.

### Comparative example 2-3: Preparation of thin film of LCNF reinforced PBAT composite material

1 wt% of LCNF powder obtained in Example 1-8 was added to PBAT, mixed well and extruded using a twin-screw extruder at 150°C and 100 rpm to obtain LCNF reinforced PBAT composite material.

Then, the PBAT/LCNF composite material was dissolved in chloroform (the solid-liquid ratio of the composite material to chloroform was 1:10) and cast into a thin film, and then the solvent was evaporated to obtain a thin film of the composite material with a dry film thickness of 30 µm.

### Comparative example 2-4: Preparation of CNF reinforced PBAT thin film

In this comparative example, the CNF reinforced PBAT thin film of the prior art was prepared. The preparation method was as follows: 10g of bamboo powder was treated with 4wt% peracetic acid at 85°C and a solid-liquid ratio of 1:5 for 45 minutes to remove the lignin therein, and repeated 3-4 times until the bamboo powder was completely bleached; and washed with a large amount of deionized water until neutral; 5g of bleached bamboo powder was then dispersed in 450 ml of sodium acetate buffer solution (pH=6.8), and CNF was prepared by the oxidation of 2,2,6,6-tetramethylpiperidine oxide (TEMPO), in which the mass ratio of bamboo powder: TEMPO: sodium bromide was 1:0.016:0.16; then a certain amount of sodium hypochlorite solution (15 mmol/g bamboo powder) was added, titrated with NaOH solution to keep the pH of the reaction solution at 10.5, and reacted for 2 hours at room temperature; after the reaction was completed, the sample was washed with a large amount of deionized water until neutral, and then mechanically peeled off using a high-speed mixer to obtain a CNF solution.

The CNF solution was freeze dried, and then 1wt% of dried CNF was added to PBAT, mixed well and extruded using a twin-screw extruder at 150°C and 100 rpm to obtain CNF reinforced PBAT composite material.

The resulting composite material was dissolved in chloroform (with a solid-liquid ratio of the composite material to chloroform of 1:10), and cast into a thin film, and then the solvent was evaporated to obtain a thin film of the composite material with a dry film thickness of 30 µm.

### Comparative example 2-5: Preparation of lignin reinforced PBAT thin film

0.2% of milled wood lignin dry powder was added to PBAT particles and mixed well, and mixed and extruded into pellets using a twin-screw extruder at 150°C and 100 rpm. Then, the obtained pellets were dissolved in chloroform (a solid-liquid ratio of the pellets to chloroform of 1:10), and cast into a thin film, and then the solvent was evaporated to obtain a thin film with a dry film thickness of 30 µm.

### Comparative example 2-6: Preparation of lignin and CNF reinforced PBAT thin film

0.2wt% of milled wood lignin dry powder and 1wt% of dried CNF were added to PBAT particles and mixed well, and mixed and extruded into pellets using a twin-screw extruder at 150°C and 100 rpm. Then, the obtained pellets were dissolved in chloroform (a solid-liquid ratio of the pellets to chloroform of 1:10), and cast into a thin film, and then the solvent was evaporated to obtain a thin film with a dry film thickness of 30 µm.

### Comparative example 2-7: Preparation of PBAT thin film

PBAT was extruded into pellets using a twin-screw extruder at 150°C and 100 rpm. Then, the obtained pellets are dissolved in chloroform (a solid-liquid ratio of the pellets to chloroform of 1:10), and cast into a thin film, and then the solvent was evaporated to obtain a thin film with a dry film thickness of 30 µm.

The cross-section of the prepared thin film of the composite material was observed using SEM, as shown in Figure 12.

### Example 2-8: Test of the Properties of thin films

In this example, the mechanical properties, UV absorption property, degradation property, and barrier property of the thin films obtained in Examples 2-1 to 2-5 and Comparative examples 2-1 to 2-7 were tested respectively.

Mechanical property test: the mechanical properties of the thin films were tested using 3345 Tensile testing machine (Instron, USA) according to GBIT 1040.3-2006. The actual thickness of the test specimens was measured using CT-100 thickness gauge, at least 7 specimens were prepared for each group, and the average value was taken. The tensile rate for the test was 50 mm/min.

UV absorption property test: the transmittance of the thin film sample in the range of 250-400 nm was characterized by UV-visible absorption spectroscopy and recorded. The UV absorption capacities of all the thin films were normalized, and the UV absorption capacity of pure PBAT thin films was treated as 0%.

Degradation property test: the thin films were subjected to alkaline hydrolysis with 0.5mol of NaOH solution at 58°C for 72 hours using standard alkaline hydrolysis degradation methods, and the residual weight of each film sample was measured at a specific time point.

Barrier property test: the water vapor transmission (WVP) of the thin films was measured using a test chamber and a moisture cup referring to GB/T 12704.1-2009, with an effective test area of 0.00283 m², a saturated vapor pressure of 6630 Pa at the test temperature, and a relative humidity of 90%.

The test results were shown in Tables 3 and 4 below.

**Table 3**

| Sample | Tensile strength (MPa) | Elongation at break(%) | Young's modulus (GPa) | UV absorption(%) |
|---|---|---|---|---|
| Example 2-1 | 30.0±2.4 | 700±50 | 90.0±3.5 | 30 |
| Example 2-2 | 33.5±1.5 | 800±25 | 94.5±6.0 | 25 |
| Example 2-3 | 31.0±1.0 | 750±50 | 91.5±3.0 | 25 |
| Example 2-4 | 33.0±2.0 | 800±26 | 94.5±5.5 | 20 |
| Example 2-5 | 34.0±1.5 | 800±30 | 95.0±6.8 | 15 |
| Comparative example 2-1 | 23.0±2.4 | 550±50 | 80.0±3.0 | 28 |
| Comparative example 2-2 | 33.5±2.0 | 750±50 | 94.5±5.5 | 10 |
| Comparative example 2-3 | 33.8±1.6 | 810±25 | 94.5±6.0 | 25 |
| Comparative example 2-4 | 23.5±1.6 | 500±50 | 80.0±6.0 | 0 |
| Comparative example 2-5 | 26.5±2.5 | 550±50 | 85.0±3.0 | 21 |
| Comparative example 2-6 | 28.0±2.5 | 550±50 | 80.0±3.0 | 21 |
| Comparative example 2-7 | 28.0±2.0 | 812±60 | 82.4±2.8 | 0 |

**Table 4**

| Sample | Degradation property Residual weight after 48 hours ( % ) | water vapor transmission WVP (×10⁻¹¹ g·m/m²·s·Pa) |
|---|---|---|
| Example 2-1 | 25 | 3.37 |
| Comparative example 2-7 | 40 | 6.04 |

The above results showed that:
-- Compared to pure PBAT thin film (Comparative example 2-7), addition of 1 wt% of lignocellulose which had been subjected to esterification pretreatment to have in-situ dissociation function as a reinforcing material, and which will dissociate in situ into LCNF during the mixing process with PBAT, can significantly improve the Young's modulus and UV absorption capacity of the thin films of the resulting composite materials (Examples 2-1 to 2-5), and which were positively correlated with lignin content and diameter of LCNF;
-- Compared to Comparative example 2-3 (i.e., the fibers that had been subjected to esterification pretreatment to have in-situ dissociation function were prepared into LCNF first, dried and then mixed with PBAT to prepare the thin films of composite materials), the thin films in Example 2-2 of the present invention have similar mechanical properties and UV absorption capacity, indicating that LCNF was uniformly dispersed in the composite materials prepared by in-situ dissociation in Example 2-2. Moreover, the scheme of preparing PBAT/LCNF in one step by in-situ dissociation in Example 2-2 was obviously simple in operation process and lower in energy consumption;
-- Compared to the thin films of the prior art prepared in other Comparative examples, the thin films prepared in the examples of the present invention showed significantly improved mechanical properties and absorption property, indicating that the LCNF that had been subjected to esterification pretreatment to have in-situ dissociation function was fully dispersed in the polymer matrix, effectively improving the mechanical properties and absorption property of the polymer matrix, and thus significantly superior to LCNF reinforced composite materials prepared by existing technical methods.
-- Compared to pure PBAT thin films (Comparative example 2-7), the thin films prepared in the examples of the present invention showed significantly improved degradation property and barrier property, indicating that the LCNF with in situ dissociation function of the present invention exhibited good degradation property, and its degradation ability was effectively improved when combined with the polymer matrix; LCNF was fully dispersed in the polymer matrix, thus effectively improving the barrier property of the polymer matrix, and thus significantly superior to LCNF reinforced composite materials prepared by existing technical methods.

The above examples are only specific embodiments of the present invention, but the scope of the present invention is not limited to those. Any modifications, equivalent substitutions, and improvements made by those skilled in the art in the technical scope disclosed in the present invention within the spirit and principles of the present invention should be encompassed within the scope of protection of the present invention.

## Claims

1. A method for preparing lignocellulose nanofibril, comprising:
(1) dispersing a biomass raw material in a binary anhydride and 0-5%, preferably 0-2% water, performing an esterification pretreatment reaction at a temperature below 120°C to obtain a pretreatment reaction product, and washing the pretreatment reaction product until neutral to obtain a neutral pretreatment reaction product; and
(2) dispersing the neutral pretreatment reaction product in a medium, and performing a dissociation treatment in a nanofibrillation equipment to obtain a dispersion of lignocellulose nanofibril.

2. The method according to claim 1, wherein in the esterification pretreatment reaction of step (1), the temperature used is 20-120°C, preferably 30-120°C, more preferably 60-110°C, and most preferably 80-100°C.

3. The method according to claim 1, wherein the biomass raw material is selected from wood, Gramineous plants, crop straws, fruit shells, pine cones, and other plant residues.

4. The method according to claim 3, wherein the biomass raw material is selected from bamboo, reed, rice straw, corn straw, wheat straw, sorghum straw, peanut shell, rice husk, pine cones, sugarcane bagasse, and coffee bean residues.

5. The method according to claim 1, wherein the binary anhydride is selected from malonic anhydride, maleic anhydride, dimethyl maleic anhydride, fumaric anhydride, succinic anhydride, methyl succinic anhydride, 2-hydroxy succinic anhydride, (2-propenyl) succinic anhydride, S-acetylmercapto succinic anhydride, cis-3-carboxylpentenedicarboxylic anhydride, trans-1,2-cyclohexanedicarboxylic anhydride, glutaric anhydride, adipic anhydride, cis-4-cyclohexene-1,2-dicarboxylic anhydride, cyclohexane 1,2-dicarboxylic anhydride, heptanedioic anhydride, octanedioic anhydride, azelaic anhydride, dodecyl succinic anhydride, dodecenyl succinic anhydride, phthalic anhydride, 4-chloro phthalic anhydride, tetrachloro phthalic anhydride, 3-fluoro phthalic anhydride, 3,6-difluoro phthalic anhydride, tetrafluoro phthalic anhydride, tetrahydro phthalic anhydride, methyl tetrahydro phthalic anhydride, and citric anhydride.

6. The method according to claim 5, wherein the binary anhydride is selected from maleic anhydride, succinic anhydride, glutaric anhydride and phthalic anhydride.

7. The method according to claim 1, wherein the weight ratio of the biomass raw material to the binary anhydride is 5:1-1:100, preferably 1:1-1:50, more preferably 1:4-1:20.

8. The method according to claim 1, wherein in the esterification pretreatment reaction of step (1), no water is present, i.e. the esterification pretreatment reaction is carried out in an anhydrous system.

9. Lignocellulose nanofibril obtainable by the method of claim 1.

10. The lignocellulose nanofibril according to claim 9, which has a lignin content of 10-40%, preferably 15-40%, and more preferably 15-25%, a surface charge of 300-3000 µmol/g, preferably 600-2000 µmol/g, a thermal decomposition temperature of higher than 200°C, preferably higher than 240°C, a length of 500-5000 nm, preferably 1000-5000 nm, a diameter of 3-20 nm, preferably 3-10 nm.

11. A method for preparing a lignocellulose nanofibril reinforced composite material, comprising:
(1) dispersing a biomass raw material in a binary anhydride and 0-5% water, performing an esterification pretreatment reaction at a temperature below 120°C to obtain a pretreatment reaction product, and washing the pretreatment reaction product until neutral to obtain a neutral pretreatment reaction product; and
(2) drying the neutral pretreatment reaction product and mixing with a polymer matrix to obtain a lignocellulose nanofibril reinforced composite material.

12. The method according to claim 11, wherein in the esterification pretreatment reaction of step (1), the temperature used is 20-120°C, preferably 30-120°C, more preferably 60-110°C, and most preferably 80-100°C.

13. The method according to claim 11, wherein the biomass raw material is selected from wood, Gramineous plants, crop straws, fruit shells, pine cones, and other plant residues.

14. The method according to claim 13, wherein the biomass raw material is selected from bamboo, reed, rice straw, corn straw, wheat straw, sorghum straw, peanut shell, rice husk, pine cones, sugarcane bagasse, and coffee bean residues.

15. The method according to claim 11, wherein the binary anhydride is selected from malonic anhydride, maleic anhydride, dimethyl maleic anhydride, fumaric anhydride, succinic anhydride, methyl succinic anhydride, 2-hydroxy succinic anhydride, (2-propenyl) succinic anhydride, S-acetylmercapto succinic anhydride, cis-3-carboxylpentenedicarboxylic anhydride, trans-1,2-cyclohexanedicarboxylic anhydride, glutaric anhydride, adipic anhydride, cis-4-cyclohexene-1,2-dicarboxylic anhydride, cyclohexane 1,2-dicarboxylic anhydride, heptanedioic anhydride, octanedioic anhydride, azelaic anhydride, dodecyl succinic anhydride, dodecenyl succinic anhydride, phthalic anhydride, 4-chloro phthalic anhydride, tetrachloro phthalic anhydride, 3-fluoro phthalic anhydride, 3,6-difluoro phthalic anhydride, tetrafluoro phthalic anhydride, tetrahydro phthalic anhydride, methyl tetrahydro phthalic anhydride, and citric anhydride.

16. The method according to claim 15, wherein the binary anhydride is selected from maleic anhydride, succinic anhydride, glutaric anhydride and phthalic anhydride.

17. The method according to claim 11, wherein the weight ratio of the biomass raw material to the binary anhydride is 5:1-1:100, preferably 1:1-1:50, more preferably 1:4-1:20.

18. The method according to claim 11, wherein in the esterification pretreatment reaction of step (1), no water is present, i.e. the esterification pretreatment reaction is carried out in an anhydrous system.

19. The method according to claim 11, wherein the polymer matrix is selected from polyethyleneglycol, polyvinyl alcohol, polylactic acid, polybutylene adipate terephthalate, polybutylene succinate, polybutylene succinate adipate, poly(ε-caprolactone), polypropylene carbonate), polyglycolic acid, poly(butylene succinate-co-butylene terephthalate), poly (butylene succinate-co-terephthalate), poly(ethylene succinate), polyurethane, polyamide, polycarbonate, polyoxymethylene, polyethylene terephthalate, polybutylene terephthalate, polypropylene terephthalate, polyethylene naphthalate, diallyl terephthalate, poly(p-hydroxybenzoate), and polyacrylonitrile.

20. The method according to claim 19, wherein the polymer matrix is selected from polybutylene adipate terephthalate, polylactic acid and polyurethane.

21. Lignocellulose nanofibril reinforced composite material obtainable by the method according to claim 11.
